(19) **Europäisches Patentamt / European Patent Office / Office européen des brevets**

(11) **EP 1 902 411 B1**

(12) **EUROPÄISCHE PATENTSCHRIFT**

(45) Veröffentlichungstag und Bekanntmachung des Hinweises auf die Patenterteilung:
**08.06.2011   Patentblatt 2011/23**

(21) Anmeldenummer: **06776082.7**

(22) Anmeldetag: **27.06.2006**

(51) Int Cl.:
***G06K 19/07*** *(2006.01)*

(86) Internationale Anmeldenummer:
**PCT/EP2006/006159**

(87) Internationale Veröffentlichungsnummer:
**WO 2007/003300 (11.01.2007 Gazette 2007/02)**

(54) **SCHALTUNGSANORDNUNG ZUR VERWENDUNG IN RF-TRANSPODERN SOWIE VERFAHREN ZUM STEUERN EINER ANZAHL DERARTIGER TRANSPONDER**

CIRCUIT ASSEMBLY FOR USE IN RF TRANSPONDERS, AND METHOD FOR CONTROLLING A NUMBER OF SUCH TRANSPONDERS

ENSEMBLE CIRCUIT D'ACCUMULATION D'ENERGIE DESTINE A ETRE UTILISE DANS DES TRANSPONDEURS RF ET PROCEDE DE COMMANDE D'UN CERTAIN NOMBRE DE TRANSPONDEURS DE CE TYPE

(84) Benannte Vertragsstaaten:
**DE FR**

(30) Priorität: **02.07.2005   DE 102005031021**

(43) Veröffentlichungstag der Anmeldung:
**26.03.2008   Patentblatt 2008/13**

(73) Patentinhaber: **Atmel Automotive GmbH 74072 Heilbronn (DE)**

(72) Erfinder:
• **FISCHER, Martin 74629 Pfedelbach (DE)**

• **FRIEDRICH, Ulrich 74248 Ellhofen (DE)**

(74) Vertreter: **Grünecker, Kinkeldey, Stockmair & Schwanhäusser Anwaltssozietät Leopoldstrasse 4 80802 München (DE)**

(56) Entgegenhaltungen:
**WO-A-03/063076**

Printed by Jouve, 75001 PARIS (FR)

## Beschreibung

Die Erfindung betrifft eine Speicherschaltungsanordnung für einen semi-passiven oder passiven RFID-Transponder, mit zumindest einem ersten Speichermittel zum Speichern elektrischer Energie, das zum Halten eines Steuerzustands des Transponders über eine vorgegebene Zeit $t$ ausgebildet ist.

Weiterhin betrifft die Erfindung ein Verfahren zum Halten eines Steuerzustands eines semi-passiven oder passiven RFID-Transponders.

Ein Radiofrequenz-Identifikationssystem (RFID-System) wird allgemein aus zwei grundlegenden Komponenten gebildet, dem in der Regel passiven Transponder - auch als *tag* oder *label* bezeichnet -, der an den zu identifizierenden Objekten angebracht wird und in dieser Form keine eigene Energieversorgung besitzt, und einem stationären oder mobilen Erfassungsgerät (Basisstation, *reader*). Der Transponder als Herzstück eines solchen Systems beinhaltet einen integrierten Schaltkreis (IC) als Datenträger sowie eine Empfangseinrichtung in Form einer Antenne; die Erfassungsgeräte beinhalten Steuereinheit, Frequenzmodul und (Sende-)Antennen. Der Datenaustausch zwischen Transponder und Basisstation erfolgt über elektromagnetische Felder in verschiedenen Frequenzbereichen, vorzugsweise - wie erwähnt - jedoch im RF-Bereich.

Derartige Transponder können auch über Sensoreigenschaften verfügen, z.B. zur Messung von Temperaturen, und werden dann als Remote Sensoren bezeichnet, die ebenso in den Bereich der vorliegenden Erfindung fallen.

Sollen mit Hilfe eines passiven RFID-Systems mehrere in einem gemeinsamen RF-Feld befindliche Transponder ausgelesen werden, so kommt eine sog. Antikollisions-Prozedur zum Einsatz. Mit Hilfe einer derartigen Prozedur werden die Transponder seriell ausgelesen. Nach dem Auslesen eines bestimmten Datensatzes aus dem integrierten Schaltkreis des Transponders, beispielsweise einer Identifikationsnummer (ID), wird der ausgelesene Transponder in einen inaktiven Modus (Betriebs- oder Steuerzustand) versetzt, d.h. unter Setzen einer entsprechenden Markierung *(flag)* für die Kommunikation mit der Basisstation stumm geschaltet, so dass anschließend weitere Transponder möglichst störungsfrei ausgelesen werden können.

Da passive Transponder über das RF-Feld mit Energie versorgt werden, stellt es bei derartigen Anwendungen eine besonderes Problem dar, dafür Sorge zu tragen, dass die Transponder während der gesamten Prozedur auch über Versorgungslücken hinweg ihre Steuerzustände halten oder sich zumindest nach einem erfolgreichen Auslesen des Datensatzes nicht mehr an der Kommunikation mit der Basisstation beteiligen. Dieser Aspekt ist vor allem dann kritisch, wenn sich die Trägerfrequenzen im UHF- oder im Mikrowellenbereich bewegen und die Lage der Transponder im Raum sich relativ zur Basisstation ändert:

Im UHF- und Mikrowellenbereich entstehen durch Überlagerungseffekte auf Grund von Reflexionen Raumbereiche, in denen die Energieversorgung der Transponder durch das Trägersignal nicht mehr sichergestellt ist. Solche Raumbereiche müssen dann durch einen auf dem Transponder-IC befindlichen Energiespeicher, in der Regel einen Kondensator, überbrückt werden. Da die mit einer Überbrückung derartiger Raumbereiche verbundenen Zeiten recht groß werden können und regelmäßig im Sekundenbereich liegen, nehmen solche Speicher ausgedehnte Flächen auf dem IC in Anspruch, so dass entsprechende Lösungen konstruktiv unrentabel sind. Daher gab es in der Vergangenheit Bestrebungen sicherzustellen, dass derartige Versorgungslöcher sich nicht negativ auf die Antikollisions-Prozedur auswirken.

Aus der US 5,963,144 ist ein Transponder und ein Verfahren zu dessen Steuerung bekannt, bei dem der Transponder nach seiner Erkennung (Registrierung) während einer Zeit $t$ vollständig abgeschaltet wird, wobei $t$ ungefähr 2 s beträgt. Unabhängig davon, ob die Antikollisions-Prozedur abgeschlossen ist oder nicht, klinkt sich der entsprechende Transponder nach Ablauf dieser Zeit automatisch wieder mit in die Kommunikation ein. Das Abschalten der Transponder erfolgt gemäß der US 5,963,144 durch ein Verstellen der Eingangsimpedanz des Transponders, so dass insbesondere als nachteilig anzusehen ist, dass dieser während der fraglichen Zeit nicht anderweitig angesprochen werden kann, z.B. mittels einer Set- oder Reset-Prozedur. Darüber hinaus können im Zuge von Versorgungslücken undefinierte Steuerzustände des Transponders auftreten, die nach Ablauf der Zeit $t$ möglicherweise an das Gesamtsystem übertragen werden. Eine Speicherung des Steuerzustands (der Register) ist nicht möglich.

Die WO 03/063076 beschreibt ein Steuerungsverfahren für einen Transponder, im Zuge dessen ein Knoten definitiv gesetzt wird. Der (Spannungs-)Zustand am diesem Knoten wird anschließend mittels eines Speicherkondensators gehalten, solange das Tag mit Energie versorgt ist. Entfällt die (interne) Versorgung, wirken sich Leckströme der offenbarten Schaltung aus und entladen den Knoten, d.h. den Kondensator. Diese Ausgestaltung bedingt die folgenden Nachteile: Da das Entladen des Speicherkondensators unkontrolliert über Leckströme $I_L$ erfolgt - im Folgenden auch als "undefiniertes Entladen" bezeichnet -, sind die erreichbaren Haltezeiten stark von der Umgebungstemperatur T abhängig ($I_L \sim e^{-T}$). Dadurch kann die mögliche Speicherzeit um mehr als einen Faktor 10 schwanken. Darüber hinaus besitzen Leckströme generell auch bei konstanter Temperatur herstellungsbedingt eine große Toleranz. Somit ist es mit der hier vorgeschlagenen Lösung insbesondere nicht möglich, die in der hier einschlägigen Norm ISO-IEC_ CD 18000-6C (Seite 31) verlangten Werte für die Haltezeit $t$ *(persistence time;* 500 ms < $t$ < 5 s) zu erfüllen. Darüber hinaus ist auch beim Gegenstand der WO 03/063076 ein Reset des Knotens nicht möglich, nachdem er einmal gesetzt wurde. Entgegen den Forderungen der o.g. Norm ist weiterhin bei bestehender Energieversorgung des Tags gar keine Haltezeit definiert, d.h. ein Entladen des Knotens findet nicht statt.

Gemäß der deutschen Patentanmeldung 10 2004 007 106.3 derselben Anmelderin vom 13.02.2004 wird ebenfalls ein Speicherkondensator für einen Steuerzustand eines Transponders oder eines Remote Sensors über Leckströme undefiniert entladen, sodass die Haltezeiten stark von der Umgebungstemperatur und den vorliegenden Herstellungstoleranzen abhängen. Ein Erreichen der o.a. Werte ist damit ebenfalls nicht möglich.

Der Erfindung liegt die Aufgabe zugrunde, eine Schaltungsanordnung sowie ein Verfahren der jeweils eingangs genannten Art dahingehend weiter zu entwikkeln, dass in einfacher und kostengünstiger Weise die Nachteile des Standes der Technik möglichst zu überwinden.

Diese Aufgabe wird gelöst durch die Gegenstände mit den Merkmalen der Ansprüche 1 und 12. Weitere vorteilhafte Ausgestaltungen ergeben sich aus den Unteransprüchen.

Die Aufgabe wird bei einer Speicherschaltungsanordnung der eingangs genannten Art gelöst, durch ein Entlademittel über welches das erste Speichermittel innerhalb der Zeit t über definiert entladbar ist. Die erfindungsgemäße Schaltungsanordnung basiert folglich nicht auf dem Vorhandensein undefinierter Leckströme, sondern darauf, dass ein relativ großes erstes Speichermittel, welches zuvor in bestimmter Weise aufgeladen wurde, ab einem bestimmten Zeitpunkt mittels eines sehr kleinen Stromflusses definiert entladbar ist. Dabei ist darauf zu achten, der definierte Entladestromfluss an einem betreffenden Schaltungsknoten größer als die dort auftretenden Leckströme ist. Dadurch wird erfindungsgemäß eine durch entsprechende Dimensionierung sowohl des Speicher- als auch des Entlademittels praktisch beliebig definierbare Haltezeit t erreicht.

Entsprechend ist zur Lösung der Aufgabe bei einem Verfahren der eingangs genannten Art vorgesehen, dass ein erstes elektrisches Speichermittel zum Halten des Steuerzustands mit einer ersten Referenzspannung aufgeladen und anschließend während einer Zeit *t* definiert wieder entladen wird.

Gemäß einer ersten Weiterbildung der erfindungsgemäßen Schaltungsanordnung weist diese ein zweites Speichermittel zum Speichern elektrischer Energie auf, das zum Übernehmen eines Speicherzustands des ersten Speichermittels über ein steuerbares Schaltmittel mit dem ersten Speichermittel in Wirkverbindung steht. Bei einem erfindungsgemäßen Verfahren kann dementsprechend vorgesehen sein, dass ein Speicherzustand des ersten Speichermittels zum Halten des Steuerzustands gesteuert an ein zweites Speichermittel weitergegeben wird. Auf diese Weise kann der Entladevorgang aufgrund der Bereitstellung von zwei zusammenwirkenden Speichermitteln auch dann stattfinden, wenn während der gesamten Zeit eine ausreichende Versorgungsspannung für den Transponder vorhanden ist, wie in der ISO-IEC_CD 18000-6C gefordert. Der hierzu erforderliche definierte Entladestrom kann beispielsweise von einer *Bandgap* abgeleitet werden, welche z.B. eine geeignete Stromreferenz zur Verfügung stellt. Mit dieser Stromreferenz und einem geeigneten Stromspiegel kann der gewünschte Entladestrom erzeugt werden.

Nach einer vorteilhaften Weiterbildung der erfindungsgemäßen Speicherschaltungsanordnung sind die ersten und/oder zweiten Speichermittel als Kondensatoren (Kapazitäten C1, C2) ausgebildet, wobei das erste Speichermittel vorzugsweise mehr elektrische Energie aufnehmen kann als das zweite Speichermittel, d.h. C1 >> C2. Auf diese Weise kann verfahrensmäßig der Speicherzustand des ersten Speichermittels an das zweite Speichermittel bereits zu einem Zeitpunkt weitergegeben werden, bevor das erste Speichermittel überhaupt aufgeladen wurde, ohne dass dabei ein Spannungseinbruch auftritt. Dadurch entfällt im Rahmen der vorliegenden Erfindung die sog. *Settletime* von einer bis mehreren Millisekunden, wodurch die Antikollisions-Prozedur deutlich schneller wird. Unter *"Settletime"* wird diejenige Zeit verstanden, die nach dem verwendeten Protokoll abzuwarten ist, bis sich die eingesetzten Speichermittel (Kapazitäten) aufgeladen haben. Wenn zusätzlich das Weitergeben an bzw. Zwischenspeichern auf das zweite Speichermittel bereits vor Beginn der Aufladephase des ersten Speichermittels geschieht, kann das erste Speichermittel unabhängig vom Zustand des zweiten Speichermittels unmittelbar nach Erreichen eines Bereichs ausreichender Feldstärke wieder aufgeladen werden.

Weiterhin kann bei einer erfindungsgemäßen Speicherschaltungsanordnung ein zweites steuerbares Schaltmittel vorgesehen sein, das zum Aufladen des ersten Speichermittels mit einer ersten Referenzspannung zwischen die erste Referenzspannung und das erste Speichermittel geschaltet ist. Verfahrenstechnisch erfolgt das Aufladen des ersten Speichermittels vorzugsweise zu Zeiten vorhandener Energieversorgung des Transponders, wobei das erste Speichermittel nach einer Weiterentwicklung des erfindungsgemäßen Verfahrens zumindest immer dann neu aufgeladen wird, wenn der Transponder nach einer Energieversorgungslücke erneut mit Energie versorgt wird.

Zudem ist vorteilhafter Weise das erste und/oder zweite Speichermittel über ein drittes steuerbares Schaltmittel entladbar, um beispielsweise im Falle eines Reset-Signals das durch die vorliegende Erfindung geschaffene Statusregister unmittelbar wieder auf Null zurücksetzen zu können.

Die erfindungsgemäße Speicherschaltungsanordnung weist nach einer bevorzugten Weiterbüdung eine Logikschaltung auf, die in signaltechnischer Wirkverbindung mit dem Entlademittel und/oder dem ersten Schaltmittel und/oder dem zweiten Schaltmittel und/oder dem dritten Schaltmittel zum Steuern zumindest eines dieser Mittel angeordnet ist.

Zum Feststellen bzw. Auswerten des Steuerzustands eines Transponders oder einer vergleichbaren Vorrichtung besitzt die erfindungsgemäße Speicherschaltungsanordnung vorzugsweise eine Auswerteschaltung für einen Speicherzustand des ersten und/oder des zweiten Speichermittels, die dabei mit dem ersten bzw. zweiten Speichermittel und in vorteilhafter Weise alternativ oder zusätzlich mit einer zweiten Referenzspannung in Wirkverbindung steht. Verfahrenstechnisch kann somit vorgesehen sein, dass der Speicherzustand des ersten und/oder zweiten Speichermittels zum Auswerten des Steuerzustands mit einer zweiten Referenzspannung verglichen wird.

Die Auswerteschaltung kann alternativ als Komparator (mit einer entsprechenden weiteren Referenzspannung) oder als Inverter ausgebildet sein. Hierbei ist im Falle der Verwendung eines Komparators die Auswertungsschwelle für den Speicherpegel (HIGH = gesetzt, d.h. Tag erfasst *(selected);* LOW = nicht gesetzt) des zweiten Speichermittels über die Referenzspannung quasi frei festlegbar, während dies bei einem Inverter, z.B. einem CMOS-Inverter, nur in einem bestimmten Bereich möglich ist, der zudem von der Versorgungsspannung abhängt.

Verfahrenstechnisch wird dementsprechend bevorzugt der weitergegebene Steuerzustand des ersten und/oder zweiten Speichermittels zu Steuerungszwecken ausgewertet, sodass bei Vorhandensein zweier Speichermittel das erste Speichermittel auch als Vorlademittel und das zweite Speichermittel als eigentliches Status-Haltemittel zu bezeichnen wäre.

Dabei stehen vorzugsweise die Auswerteschaltung und die logische Schaltungseinheit in signaltechnischer Wirkverbindung, sodass über das Ergebnis der Auswertung eine steuerungstechnischer Rückwirkung auf die logische Schalteinheit möglich ist, z.B. um im Falle einer gespeicherten logischen Null am zweiten Speichermittel die Weitergabe eines ggf. von Null verschiedenen Speicherzustands des ersten Speichermittels durch Sperren des dazwischen befindlichen ersten Schaltmittels zu unterbinden. Das bedeutet, dass die gesteuerte Weitergabe des Speicherzustands erfindungsgemäß in Abhängigkeit von dem Ergebnis der Auswertung erfolgt.

Die zweite Referenzspannung ist nach einer weiteren Ausgestaltung der Erfindung kleiner, insbesondere um ein Vielfaches, als die erste Referenzspannung, UREF1 >> UREF2. Dies trägt gemeinsam mit der bereits oben angesprochenen relativen Dimensionierung der Speichermittel (C1>>C2) dazu bei, dass sich die Haltezeit $t$ verlängert, wobei die Weitergabe des Speicherzustands vom ersten auf das zweite Speichermittel - wie erwähnt - zudem möglichst frühzeitig während des Ladezyklus des ersten Speichermittels erfolgen kann.

Spezielle Weiterbildungen der erfindungsgemäßen Speicherschaltungsanordnung sehen vor, dass wenigstens eines der ersten, zweiten oder dritten Schaltmittel als PMOS-Transistor, als NMOS-Transistor oder als Schaltungseinheit mit wenigstens einem Transistor, insbesondere als abschaltbarer Spannungsfolger, ausgebildet ist. Außerdem kann wenigstens eines der ersten, zweiten oder dritten Schaltmittel als Reihenschaltung aus einer Mehrzahl von Transistoren, insbesondere PMOS- und/oder NMOS-Transistoren, ausgebildet sein. Es muss sich bei den Schaltmitteln erfindungsgemäß also keinesfalls lediglich um "einfache" Schaltmittel, wie isolierte Transistoren, handeln. Möglich ist daher in diesem Zusammenhang auch der Einsatz mikromechanischer Schalter, bei denen Vorteilhafter Weise kaum bzw. keine Leckströme auftreten. Entsprechend sieht eine bevorzugte Ausgestaltung der erfindungsgemäßen Schaltungsanordnung vor, dass wenigstens eines der ersten, zweiten oder dritten Schaltmittel als mikromechanischer Schalter mit geringen oder verschwindenden Leckströmen ausgebildet ist.

Zwecks einer flexiblen Einsetzbarkeit der erfindungsgemäßen Schaltungsanordnung kann darüber hinaus das erste und/oder zweite Speichermittel durch ein externes Steuersignal, wie ein Reset-Signal oder dgl., beeinflussbar, insbesondere entladbar, sein.

Die so geschaffene Speicherschaltungsanordnung bzw. das vorgeschlagene Verfahren zeichnet sich in allen erfindungsgemäßen Ausgestaltungen insbesondere dadurch aus, dass 500 ms<$t$< 5 s, sodass die Anforderungen der o.g. ISO-Norm erfüllt sind, wobei vorzugsweise weiterhin nach Ablauf der Zeit $t$ das zweite Speichermittel auch bei vorhandener Versorgungsspannung automatisch entladen wird.

Weitere Eigenschaften und Vorteile der Erfindung ergeben sich aus der nachfolgenden Beschreibung eines bevorzugten Ausführungsbeispiels anhand der Zeichnung. Es zeigt:

Fig. 1    ein Blockschaltbild einer erfindungsgemäßen Schaltungs- anordnung mit zwei Speichermitteln und einer Auswerte- schaltung;

Fig. 2    eine Detailansicht des Blockschaltbilds der Fig. 1 bei einer ersten weiteren Ausgestaltung der erfindungsgemäßen Schaltungsanordnung;

Fig. 3    eine Detailansicht des Blockschaltbilds der Fig. 1 bei einer zweiten weiteren Ausgestaltung der erfindungsgemäßen Schaltungsanordnung; und

Fig. 4    ein Blockschaltbild einer erfindungsgemäßen Schaltungs- anordnung mit zwei Speichermitteln und zwei Auswerte- schaltungen.

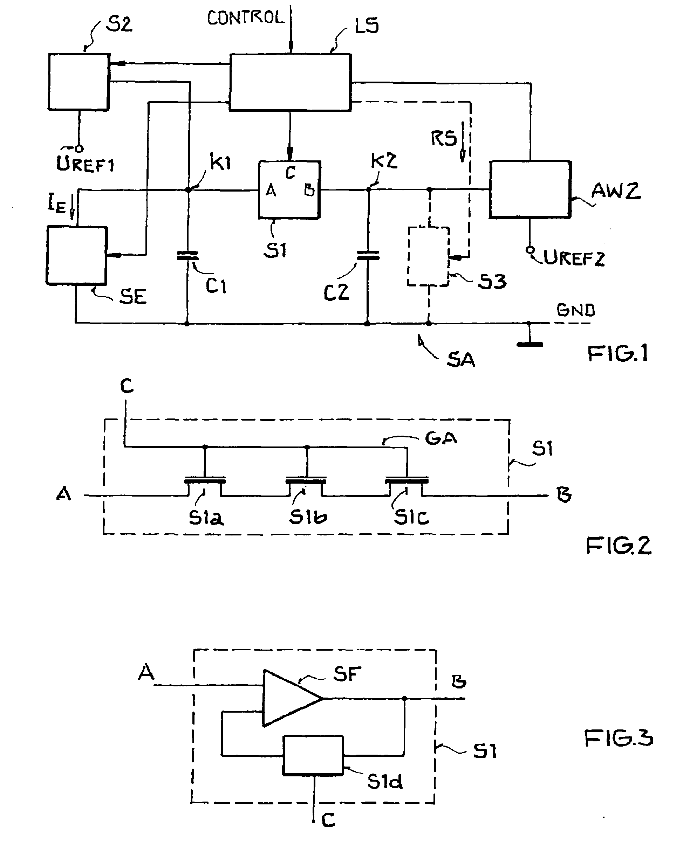

Die Fig. 1 zeigt anhand eines Blockschaltbilds eine Ausgestaltung der erfindungsgemäßen Speicherschaltungsanordnung SA, wie sie in einem passiven RFID-Transponder (als solcher nicht gezeigt) zum Einsatz kommt.

Die Schaltungsanordnung SA weist zwei Kondensatoren C1, C2 als Speichermittel für elektrische Energie auf, die jeweils zwischen einen Knoten K1 bzw. K2 der Schaltungsanordnung SA und ein gemeinsames Bezugpotential, hier Masse GND, geschaltet sind. Die Knoten K1, K2 sind über ein erstes Schaltmittel S1 in Form eines NMOS-Transistors verbunden. Auf diese Weise lassen sich durch Schließen des Schaltmittels S1 (sperrender Transistor) getrennte Spannungs-/Signalzustände an den Knoten K1, K2 herstellen. Die Kapazität des ersten Kondensators C1 ist dabei deutlich größer als die Kapazität des Kondensators C2, d.h. $C1 >> C2$.

Zwischen den Knoten K1 und das Bezugspotential GND und somit durch den Transistor S1 signaltechnisch vom Knoten K2 abtrennbar - ist parallel zu den Kondensatoren C1, C2 ein Entlademittel in Form einer Stromsenke SE geschaltet, beispielsweise eine geeignet ausgelegte Stromspiegelschaltung mit selbstsperrenden MOSFET-Transistoren, über die der Kondensator C1 definiert entladbar ist. Weiterhin ist der Knoten K1 über ein zweites Schaltmittel S2 in Form eines weiteren NMOS-Transistors mit einer Quelle für eine erste Referenzspannung UREF1 verbunden.

An den Knoten K2 - und somit durch den Transistor S1 signaltechnisch vom Knoten K1 abtrennbar- ist zusätzlich eine Auswerteschaltung AW2 für den Speicherzustand des Kondensators C2 angeschlossen, bei der es sich speziell um einen Inverter oder Komparator handeln kann. Diese steht darüber hinaus in Verbindung mit einer zweiten Referenzspannung UREF2, die erfindungsgemäß deutlich kleiner ist als die erste Referenzspannung zum Laden des Kondensators C1, d.h. $UREF1 >> UREF2$.

Im Falle der Verwendung eines Komparators ist die zweite Referenzspannung UREF2 praktisch frei wählbar und dient zur HIGH-/LOW-Bewertung des Speicherzustands des Kondensators C2. Dagegen kann die Referenzspannung UREF2 bei Verwendung eines Inverters mit dessen Betriebsspannung identifiziert werden, die wiederum mit dessen Schaltschwelle verknüpft ist, sodass auch hier bestimmte, allerdings nur eingeschränkte Einstellmöglichkeiten gegeben sind, was dem Fachmann bekannt ist.

Optional (und daher gestrichelt dargestellt) weist die Schaltungsanordnung SA ein drittes Schaltmittel S3 in Form eines weiteren NMOS-Transistors zwischen dem Knoten K2 und dem Bezugspotential GND in Parallelschaltung insbesondere zum Kondensator C2 auf. Auch diese Parallelschaltung ist somit durch den Transistor S1 von dem Knoten K1 abtrennbar.

Zum Steuern der Schaltmittel S1 bis S3 und des Entlademittels SE ist gemäß der Fig. 1 eine logische Schalteinheit LS vorgesehen, die entsprechend zumindest mit den vorstehend genannten Mitteln in signaltechnischer Wirkverbindung steht, was zeichnerisch anhand der Verbindungspfeile ausgedrückt ist. Darüber hinaus steht die logische Schalteinheit in Wirkverbindung mit der Auswerteschaltung AW2 und ist zum Empfang von Steuersignalen von weiteren, nicht gezeigten Schaltungseinrichtungen des Transponders ausgebildet (Pfeil CONTROL in Fig. 1).

Die vorstehend erläuterte Speicherschaltungsanordnung SA arbeitet wie folgt: Sie fungiert als Statusregister, das nach Erfassung des Tags durch die Basisstation (nicht gezeigt) "gesetzt" wird, d.h. den Wert Eins (HIGH) annimmt, woraufhin der Transponder für die Kommunikation mit der Basisstation stumm geschaltet wird, bis diese das Statusregister durch einen besonderen Befehl (Reset RS (vgl. Fig. 1), Wake-up oder dgl.) wieder auf Null zurücksetzt. Zusätzlich soll nach der o.g. ISO-Norm jedoch auch die Möglichkeit bestehen, dass das Tag nach einer bestimmten Zeit $t$ automatisch das entsprechende Statusbit wieder zurücksetzt.

Dazu wird zunächst erfindungsgemäß der relativ große Kondensator C1 nach Maßgabe eines entsprechenden Steuersignals CONTROL durch die logische Schaltungseinheit LS auf eine bestimmte Spannung UREF1 aufgeladen, indem diese ein Öffnen des Schaltmittels S2 veranlasst. Anschließend erfolgt - ebenfalls auf steuerungstechnische Veranlassung durch die logische Schaltungseinheit LS - von einem bestimmten Zeitpunkt ab ein definiertes Entladen des Kondensators C1 über das Entlademittel SE mittels eines geeignet eingestellten kleinen Entladestroms $I_E$ (vgl. Fig. 1), über den somit eine durch Dimensionierung definierbare (Halte-) Zeit $t$ erreichbar ist, die erfindungsgemäß an die Anforderungen der o.g. ISO-Norm angepasst wurde.

Für die Entladezeit $t$ gilt wegen $Q = C \cdot U$ und

$$I = \frac{Q}{t} :$$

$$t = \frac{C1 \cdot \Delta U}{I_E}$$

mit $\Delta U = UREF1 - UREF2$. Das Einstellen der Entladezeit $t$ geschieht vorzugsweise durch definiertes Minimieren des Entladestroms $I_E$, da jede Vergrößerung der Kondensatorfläche zur Vergrößerung von C1 mit kostspieligen Chipflächenverlusten einherginge und sich eine Erhöhung der Spannung durch Pumpen zu aufwändig gestaltet.

Um nun in das erfindungsgemäße Statusregister "einzutragen", dass der betreffende Transponder bereits erfasst wurde, wird durch Öffnen des ersten Schaltmittels S1 die Spannung vom Kondensator C1 auf den Kondensator C2 zwischengespeichert, wobei es aufgrund der relativen Dimensionierung der Kapazitäten ($C1 >> C2$) nicht zu einem Spannungseinbruch kommt. Der Kondensator C1 kann dabei entweder bei vorhandener Spannungsversorgung des Tags regelmäßig oder alternativ jeweils nur im Falle einer erforderlichen Zustandsspeicherung, d.h. punktuell geladen werden. Damit besitzt das Statusregister nach erfolgter Zwischenspeicherung auf den Kondensator C2 den Wert Eins, was durch die mit dem Kondensator C2 verbundene Auswerteschaltung AW2 ermittelbar ist, insbesondere durch Vergleich mit einer gegenüber der Ladespannung UREF1 relativ kleinen Referenzspannung UREF2. Die Auswertung erfolgt insbesondere in regelmäßigen Zeitintervallen, die durch das verwendete Protokoll vorgegeben sind.

Das Zwischenspeichern auf den Kondensator C2 geschieht vorteilhafter Weise in einem frühestmöglichen Zeitpunkt, um die laut Protokoll einzuhaltende *Settletime,* die von der Größe der jeweiligen Kapazität abhängt, abzukürzen und die Antikollision somit zu beschleunigen. Dazu wird vor dem Laden des Kondensators C1 dessen Spannung auf den Kondensator C2 geladen (Öffnen des Schaltmittels S1). Dann wird der Kondensator C1 geladen und gleichzeitig der Speicherzustand des Kondensators C2 ausgewertet, was eine gewisse Zeit in Anspruch nimmt. Nach Schließen des Schaltmittels S1 wird der Kondensator C1 anschließend definiert entladen, wie oben beschrieben.

Während der Kondensator C1 über die Zeit $t$ entladen wird, hält der Kondensator C2 den Steuerzustand (HIGH = erfasst) des Transponders. Dazu ist das erste Schaltmittel S1 derart ausgebildet, dass möglichst keine Leckströme auftreten, sodass der Speicherpegel des Kondensators C2 weiterhin dem Auswerteergebnis HIGH entspricht, wenn die Zeit $t$ abgelaufen ist. Im Falle der hier beschriebenen Verwendung eines NMOS-Transistors wird dazu vorzugsweise das Weiten-Längen-Verhältnis so angepasst, dass die auftretenden Leckströme minimiert sind (verringerte Länge, relativ große Weite), was dem Fachmann an sich geläufig ist. Nach Ablauf der Zeit $t$, oder wenn die Spannung am Kondensator C1 unter einen gewissen Wert abgefallen ist, wird dann auch der Kondensator C2 nach Maßgabe der Logikschaltung LS entladen, je nach konkreter Ausgestaltung der Erfindung entweder über das Entladernittel SE durch Öffnen des Schalters S1 oder über das optionale Schaltmittel S3. Somit setzt die erfindungsgemäße Speicherschaltungsanordnung SA automatisch nach einer definierten Zeit, hier: der Entladezeit $t$, das betreffende Statusbit zurück, wie in der o.g. Norm gefordert.

Nach dem Überstehen einer kurzen Feldlücke (Dauer < t), während der ein bereits gelesener Transponder (Kondensator C2 geladen) keine oder nur eine sehr kleine Versorgungsspannung besitzt, sodass ein Reset ausgelöst wurde, ist der Transponder bei erneutem Erreichen einer Zone mit ausreichender Feldstärke und entsprechend hoher Versorgungsspannung grundsätzlich umgehend wieder kommunikationsbereit. Jedoch greift er erfindungsgemäß weiterhin so lange nicht in eine noch laufende Antikollisions-Prozedur ein, bis die (Entlade-)Zeit $t$ vollständig abgelaufen ist. Durch das weiter oben bereits angesprochene frühe Zwischenspeichern der Spannung vom Kondensator C1 auf den Kondensator C2 kann Ersterer sehr frühzeitig nach Erreichen einer Zone mit ausreichender Feldstärke wieder aufgeladen werden, um eine maximale Haltezeit zu ermöglichten.

Ein definiertes Zurücksetzen des erfindungsgemäßen Statusregisters ist gemäß der Fig. 1 möglich, indem die Logikschaltung LS ein geeignetes Steuersignal, wie ein Reset-Signal RS (Fig. 1) oder dgl., an das dritte Schaltmittel S3 sendet, sodass dieses öffnet und den Kondensator C2 entlädt. Zu einem späteren Zeitpunkt kann dann ggf. erneut Spannung vom Kondensator C1 auf den Kondensator C2 zwischengespeichert werden.

Die Fig. 2 und 3 zeigen jeweils alternative Detailansichten einer ansonsten im Wesentlichen der Darstellung in Fig. 1 entsprechenden Speicherschaltungsanordnung gemäß weiteren Ausgestaltungen der Erfindung. Aus Gründen der Übersichtlichkeit wurden hierbei bestimmte Anschlusspunkte entsprechend der Fig. 1 mit Bezugszeichen A, B, C markiert, um eine einfache Zuordnung zu ermöglichen.

Gemäß der Fig. 2 ist zumindest ein Schaltmittel der erfindungsgemäßen Speicherschaltungsanordnung SA (Fig. 1), hier speziell das erste Schaltmittel S1, nicht als einfacher Transistor sondern als Reihenschaltung aus einer Mehrzahl von NMOS-Transistoren S1a, S1b, S1c ausgebildet, die einen gemeinsamen Gateanschluss GA besitzen. Entsprechend können erfindungsgemäß auch die weiteren Schaltmittel S2, S3 ausgebildet sein.

Gemäß der Fig. 3 ist alternativ oder zusätzlich zumindest ein Schaltmittel der erfindungsgemäßen Speicherschaltungsanordnung SA (Fig. 1), hier ebenfalls das erste Schaltmittel S1, wiederum nicht als einfacher Transistor sondern als Schaltungseinheit mit einem Spannungsfolger SF, wie einem linearen nichtinvertierenden Verstärker, und mit wenigstens einem Schalter S1d zum Abschalten des Spannungsfolgers SF ausgebildet. Bei dem Schalter S1d kann es sich erfindungsgemäß wiederum um einen NMOS-Transistor handeln. Entsprechend können erfindungsgemäß auch die weiteren Schaltmittel S2, S3 ausgebildet sein.

Selbstverständlich können die in den gezeigten Figuren enthaltenen NMOS-Schaltmittel in geeigneter Weise durch äquivalente Schaltmittel, wie insbesondere PMOS-Schaltmittel oder mikromechanische Schalter mit geringem Leckstrom, ersetzt werden, was dem Fachmann geläufig ist.

Die vorstehend beschriebenen Ausgestaltungen der Erfindung besitzen gegenüber dem Stand der Technik insbesondere den Vorteil, dass durch Dimensionierung eine definierte Zeit $t$ einstellbar ist, sodass eine sichere Antikollisions-Prozedur über weite Temperaturbereiche durchgeführt werden kann. Während dieser Prozedur, insbesondere nach erfolgter Stummschaltung, kann das Tag weiterhin jederzeit durch die Basisstation angesprochen werden. Dennoch mischt sich ein bereits erfasstes Tag nach Verlassen einer Feldlücke, deren zeitliche Dauer kleiner als die Zeit $t$ ist, nicht automatisch wieder in die Kommunikation ein, da der vorherige Steuerzustand gespeichert bleibt. Durch Wegfall bzw. Verkürzen der *Settletime* bei Vorsehen eines zweiten, kleineren Speichermittels C2, C2<<C1, wird darüber hinaus die gesamte Kommunikation beschleunigt. Schließlich findet - wie implizit gemäß ISO-IEC_CD 18000-6C gefordert - eine Entladung nicht nur während Versorgungslücken statt, sondern auch, wenn dauerhaft eine ausreichende Versorgungsspannung vorhanden ist.

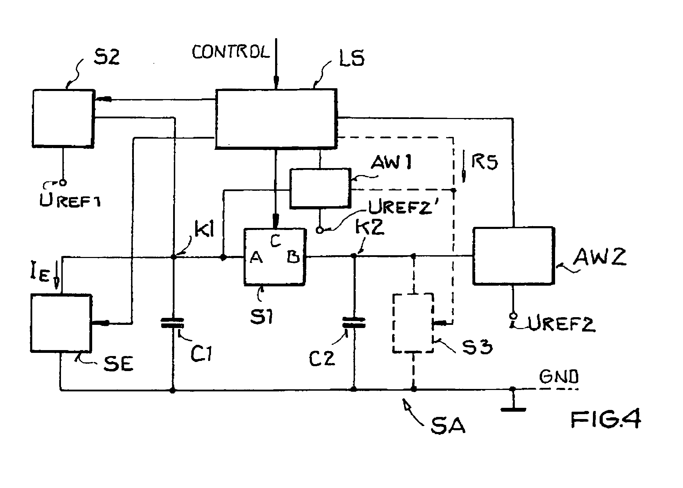

Abschließend zeigt die Fig. 4 eine Variante der erfindungsgemäßen Schaltungsanordnung gemäß der Fig. 1, bei der zusätzlich zu der mit dem zweiten Speichermittel C2 in Wirkverbindung stehenden Auswerteschaltung AW2 noch eine weitere Auswerteschaltung AW1 zum Auswerten eines Speicherzustands des ersten Speichermittels C1 vorhanden ist. Auch bei der Auswerteschaltung AW1 handelt es sich vorzugsweise entweder um einen Komparator oder um einen (CMOS-)Inverter, der einerseits mit der logischen Schaltungseinheit LS, andererseits mit dem Knoten K1 und dem Anschlusspunkt A des ersten Schaltmittels S1 verknüpft ist. Entsprechend der Auswerteschaltung AW2 für das zweite Speichermittel C2 steht auch die Auswerteschaltung AW1 mit einer Referenzspannung UREF2' zum Auswerten des Speicherzustands des Speichermittels C1 in Verbindung, wobei wiederum gilt, dass UREF2' <<UREF1. Dabei ist vorzugsweise UREF2' = UREF2. Des Weiteren ist die Auswerteschaltung AW1 gemäß der Fig. 4 zum Bereitstellen eines Steuersignals, wie eines Reset-Signals RS, für das dritte Schaltmittel S3 ausgebildet, wie durch eine von der Auswerteschaltung AW1 ausgehende gestrichelte Linie symbolisiert wird. Somit ist es möglich, nach Maßgabe des Auswertungsergebnisses in der Auswerteschaltung AW1 für das Speichermittel C1, z.B. bei nachgewiesenem LOW-Level (logische Null, *not selected*), eine gezielte Zustandsänderung auch am zweiten Speichermittel C2, speziell ein Entladen, herbeizuführen.

Obwohl vorstehend jeweils nur Ausgestaltungen mit zwei zusammenwirkenden Speichermitteln C1, C2 beschrieben worden sind, erstreckt sich der Schutzbereich der vorliegenden Erfindung auch auf Speicherschaltungsanordnungen, die lediglich ein (erstes) Speichermittel C1 mitsamt zugehöriger Auswerteschaltung AW1 sowie zugehörigen Lade- und Entlademitteln aufweisen. Maßgeblich ist, dass das Speichermittel nach dem Aufladen während einer vorzugebenden Zeit *t* über einen definierten Strom wieder entladbar ist - unabhängig davon, ob eine Versorgungsspannung vorhanden ist oder nicht. Entsprechend der Ausgestaltung und Anordnung des dritten Schaltmittels S3 ist dann auch für das einzige Speichermittel C1 eine Reset-Möglichkeit (schnelles, gezieltes Entladen) vorzusehen, die insbesondere durch die logische Schaltungseinheit LS steuerbar ist.

Bezugszeichenliste

| A | Anschlusspunkt |
|---|---|
| AW1, AW2 | Auswerteschaltung |
| B, C | Anschlusspunkt |
| C1, C2 | Speichermittel, Kondensator |
| GA | Gateanschluss |
| GND | Masse |
| $I_E$ | Entladestrom |
| K1, K2 | Knoten |
| LS | Logikschaltung |
| RS | Reset-Signal |
| SA | Speicherschaltungsanordnung |
| SE | Entlademittel, Stromsenke |
| SF | Spannungsfolger |
| S1 | Schaltmittel |
| S1 a-d | NMOS-Transistor |
| S2 | Schaltmittel |
| S3 | Schaltmittel |
| UREF1 | Referenzspannung |
| UREF2, 2' | Referenzspannung |

**Patentansprüche**

1. Speicherschaltungsanordnung für einen semi-passiven oder passiven RFID-Transponder, mit zumindest einem ersten Speichermittel zum Speichern elektrischer Energie, das zum Halten eines Steuerzustands des Transponders über eine vorgegebene Zeit t ausgebildet ist,
**dadurch gekennzeichnet, dass**
ein zweites Speichermittel (C2) vorgesehen ist, zum Speichern elektrischer Energie, das zum Übernehmen eines Speicherzustands des ersten Speichermittels (C1) über ein steuerbares Schaltmittel (S1) mit dem ersten Speichermittel (C1) in Wirkverbindung steht und ein Entlademittel vorgesehen ist, über welches das erste Speichermitteln (C1) innerhalb der Zeit t (SE) definiert entladbar ist.

2. Speicherschaltungsanordnung nach Anspruch 1, **dadurch gekennzeichnet, dass** die ersten und/oder zweiten Speichermittel (C1, C2) als Kondensatoren ausgebildet sind.

3. Speicherschaltungsanordnung nach Anspruch 1 oder 2, **dadurch gekennzeichnet, dass** das erste Speichermittel (C9) bei gleicher Spannung mehr elektrische Energie aufnehmen kann als das zweite Speichermittel (C2).

4. Speicherschaltungsanordnung nach einem der Ansprüche 1 bis 4, **gekennzeichnet durch** ein zweites steuerbares Schaltmittel (S2), das zum Aufladen des ersten Speichermittels (C1) mit einer ersten Referenzspannung (UREF1) zwischen die erste Referenzspannung (UREF1) und das erste Speichermittel (C1) geschaltet ist.

5. Speicherschaltungsanordnung nach einem der Ansprüche 1 bis 4, **dadurch gekennzeichnet, dass** das zweite Speichermittel (C2) über ein drittes steuerbares Schaltmittel (S3) entladbar ist.

6. Speicherschaltungsanordnung nach einem der Ansprüche 1 bis 5, **gekennzeichnet durch** eine logische Schaltung (LS) in signaltechnischer Wirkverbindung mit dem Entlademittel (SE) und/oder dem ersten Schaltmittel (S1) und/oder dem zweiten Schaltmittel (S2) und/oder dem dritten Schaltmittel (S3) zum Steuern zumindest eines dieser Mittel.

7. Speicherschaltungsanordnung nach einem Ansprüche 1 bis 6, **gekennzeichnet durch** eine Auswerteschaltung (AW1) für einen Speicherzustand des ersten Speichermittels (C1) in Wirkverbindung mit dem zweiten Speichermittel (C1).

8. Speicherschattungsanordnung nach einem Ansprüche 1 bis 7, **gekennzeichnet durch** eine Auswerteschaltung (AW2) für einen Speicherzustand des zweiten Speichermittels (C2) in Wirkverbindung mit dem zweiten Speichermittel (C2).

9. Speicherschaltungsanordnung nach Anspruch 7 oder 8, **dadurch gekennzeichnet, dass** die Auswerteschaltung (AW1, AW2) mit einer zweiten Referenzspannung (UREF2, UREF2') in Wirkverbindung steht.

10. Speicherschaltungsanordnung nach einem der Ansprüche 1 bis 9, **dadurch gekennzeichnet, dass** wenigstens eines der ersten, zweiten oder dritten Schaltmittel (S1, S2, S3) als MOS-Transistor ausgebildet ist.

11. Verfahren zum Halten eines Steuerzustands eines semi-passiven oder passiven RFID-Transponders, **dadurch gekennzeichnet, dass** ein erstes elektrisches Speichermittel zum Halten des Steuerzustands mit einer ersten Referenzspannung aufgeladen und anschließend während einer Zeit t definiert wieder entladen wird und das ein Speicherzustand des ersten Speichermittels zum Halten des Steuerzustandes gesteuert an ein zweites Speichermittel weitergegeben wird.

12. Verfahren nach Anspruch 11, **dadurch gekennzeichnet, dass** das erste Speichermittel zumindest dann aufgeladen wird, wenn der Transponder nach einer Energieversorgungslücke erneut mit Energie versorgt wird.

13. Verfahren nach Anspruch 12, **dadurch gekennzeichnet, dass** der Speicherzustand des ersten Speichermittels an das zweite Speichermittel weitergegeben wird, bevor das erste Speichermittel aufgeladen wird.

14. Verfahren nach Anspruch 12 oder 13, **dadurch gekennzeichnet, dass** das zweite Speichermittel nach Maßgabe eines entsprechenden Steuersignals entladen wird.

**Claims**

1. Storage circuit arrangement for a semi-passive or passive radio-frequency identification transponder, with at least one first storage means for storing electrical energy, which is constructed for maintaining a control state of the transponder over a predetermined time t, **characterised in that** a second storage means (C2) for storing electrical energy is provided, which for taking over a storage state of the first storage means (C1) is disposed in operative connection with the first storage means (C1) by way of controllable switching means (S1), and a discharging means (SE) is provided, by way of which the first storage means (C1) is dischargeable in defined manner within the time t.

2. Storage circuit arrangement according to claim 1, **characterised in that** the first and/or second storage means (C1, C2) are constructed as capacitors.

3. Storage circuit arrangement according to claim 1 or 2, **characterised in that** the first storage means (C1) can receive more electrical energy for the same voltage than can the second storage means (C2).

4. Storage circuit arrangement according to any one of claims 1 to 4, **characterised by** a second controllable switching means (S2) which for charging the first storage means (C1) by a first reference voltage (UREF1) is connected between the first reference voltage (UREF1) and the first storage means (C1).

**5.** Storage circuit arrangement according to any one of claims 1 to 4, **characterised in that** the second storage means (C2) is dischargeable by way of a third controllable switching means (S3).

**6.** Storage circuit arrangement according to any one of claims 1 to 5, **characterised by** a logic circuit (LS) operatively connected in terms of signal with the discharging means (SE) and/or the with the first switching means (S1) and/or with the second switching means (S2) and/or with the third switching means (S3) for controlling at least one of these means.

**7.** Storage circuit arrangement according to any one of claims 1 to 6, **characterised by** an evaluating circuit (AW1) for a storage state of the first storage means (C1) in operative connection with the second storage means (C1).

**8.** Storage circuit arrangement according to any one of claims 1 to 7, **characterised by** an evaluating circuit (AW2) for a storage state of the second storage means (C2) in operative connection with the second storage means (C2).

**9.** Storage circuit arrangement according to claim 7 or 8, **characterised in that** the evaluating circuit (AW1, AW2) is operatively connected with a second reference voltage (UREF2, UREF2').

**10.** Storage circuit arrangement according to any one of claims 1 to 9, **characterised in that** at least one of the first, second and third switching means (S1, S2, S3) is constructed as an MOS transistor.

**11.** Method of maintaining a control state of a semi-passive or passive radio-frequency identification transponder, **characterised in that** a first electrical storage means for maintaining the control state is charged by a first reference voltage and subsequently is again discharged in defined manner during a time t and that a storage state of the first storage means for maintaining the control state is passed on in controlled manner to a second storage means.

**12.** Method according to claim 11, **characterised in that** the first storage means is charged at least when the transponder is resupplied with energy after a gap in energy supply.

**13.** Method according to claim 12, **characterised in that** the storage state of the first storage means is passed on to the second storage means before the first storage means is charged.

**14.** Method according to claim 12 or 13, **characterised in that** the second storage means is discharged depending on a corresponding control signal.

**Revendications**

**1.** Agencement de circuit de stockage pour un transpondeur RFID passif ou semi-passif présentant au moins un premier moyen de stockage pour stocker de l'énergie électrique qui est configuré pour le maintien d'un état de commande du transpondeur pendant une durée «t» prédéterminée **caractérisé en ce qu'**un deuxième moyen de stockage (C2) est prévu pour le stockage d'énergie électrique pour la prise en charge d'un état de charge du premier moyen de stockage (C1) à travers un moyen de commutation (S1) pilotable qui est en liaison d'activation avec le premier moyen de stockage (C1) et **en ce qu'**il est prévu un moyen de décharge à travers lequel le premier moyen de stockage (C1) est déchargeable pendant une durée « t » (SE) définie.

**2.** Agencement de circuit de stockage selon la revendication 1 **caractérisé en ce que** le premier et/ou le deuxième moyen(s) de stockage (C1,C2) sont/est réalisé(s) sous la forme de condensateur(s).

**3.** Agencement de circuit de stockage selon la revendication 1 ou 2 **caractérisé en ce que** pour la même tension le premier moyen de stockage (C1) peut emmagasiner plus d'énergie électrique que le deuxième moyen de stockage (C2).

**4.** Agencement de circuit de stockage selon l'une quelconque des revendications 1 à 4 **caractérisé par** un deuxième moyen de commutation pilotable (S2) pour charger le premier moyen de stockage (C1) par une première tension de référence (UREF1) qui est monté dans le circuit entre la première tension de référence (UREF1) et le premier moyen de stockage (C1).

**5.** Agencement de circuit de stockage selon l'une quelconque des revendications 1 à 4 **caractérisé en ce que** le deuxième moyen de stockage (C2) est déchargeable à travers un troisième moyen de commutation piloté (S3).

**6.** Agencement de circuit de stockage selon l'une quelconque des revendications 1 à 5 **caractérisé par** un circuit logique (LS) en liaison d'activation de signal avec le moyen de décharge (SE) et/ou le premier moyen de commutation (S1) et/ou le second moyen de commutation (S2) et/ou le troisième moyen de commutation (S3) pour commander au moins l'un de ces moyens.

**7.** Agencement de circuit de stockage selon l'une quelconque des revendications 1 à 6 **caractérisé par** un circuit d'exploitation (AW1) pour un état de charge du premier moyen de stockage (C1) en liaison d'activation avec le deuxième moyen de stockage (C2).

**8.** Agencement de circuit de stockage selon l'une quelconque des revendications 1 à 7 **caractérisé par** un circuit d'exploitation (AW2) pour un état de charge du deuxième moyen de stockage (C2) en liaison d'activation avec le deuxième moyen de stockage (C2).

**9.** Agencement de circuit de stockage selon la revendication 7 ou 8 **caractérisé en ce que** le circuit d'exploitation (AW1,AW2) est en liaison d'activation avec une deuxième tension de référence (UREF2, UREF2').

**10.** Agencement de circuit de stockage selon l'une quelconque des revendications 1 à 9 **caractérisé en ce qu'**au moins un parmi les premier, deuxième ou troisième moyens de commutation (S1,S2,S3) est un transistor MOS.

**11.** Procédé pour le maintien d'un état de commande d'un transpondeur RFID passif ou semi-passif **caractérisé en ce qu'**un premier moyen de stockage électrique prévu pour maintenir un état de commande est chargé par une première tension de référence, et relié pendant une durée « t » définie pour le décharger à nouveau et **en ce qu'**un état de charge du premier moyen de stockage pour le maintien d'un état de commande est transmis à un deuxième moyen de stockage.

**12.** Procédé selon la revendication 11 **caractérisé en ce que** le premier moyen de stockage est chargé, au moins lorsque le transpondeur est à nouveau alimenté en énergie après une coupure en énergie d'alimentation.

**13.** Procédé selon la revendication 12 **caractérisé en ce que** l'état du moyen de charge du premier moyen de stockage est transmis au deuxième moyen de stockage avant que le premier moyen de stockage soit chargé.

**14.** Procédé selon les revendications 12 ou 13 **caractérisé en ce que** le deuxième moyen de stockage est déchargé selon un signal de commande approprié.

FIG.1

FIG.2

FIG.3

FIG.4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5963144 A
- WO 03063076 A

- DE 102004007106